# EUROPÄISCHE PATENTANMELDUNG

(11) **EP 4 589 135 A1**
(43) Veröffentlichungstag der Anmeldung: **23.07.2025**
(21) Anmeldenummer: 24152182.2
(22) Anmeldetag: 16.01.2024
(51) Int. Cl.: F03D 1/06

(54) **VERFAHREN ZUM OPTIMIEREN EINES ROTORBLATTES, ROTORBLATT UND WINDENERGIEANLAGE**

(71) Anmelder: Wobben Properties GmbH, 26607 Aurich (DE)
(72) Erfinder: Stemberg, Jochen, 26607 Aurich (DE); Weihing, Pascal, 28215 Bremen (DE); Kumar, Janani, 26603 Aurich (DE)
(74) Vertreter: Eisenführ Speiser

(57) **Zusammenfassung**

Die vorliegende Erfindung betrifft ein Verfahren (200) zum Optimieren eines Rotorblattes (108) einer Windenergieanlage (100), sowie zugehöriges Rotorblatt (108) und Windenergieanlage (100), wobei sich das Rotorblatt (108) von einem Rotorblattanschluss (109) bis zu einer Rotorblattspitze (114) in einer Rotorblattlängsrichtung mit einer Rotorblattlänge erstreckt und dabei ein sich zwischen einer Vorderkante (110) und einer Hinterkante (112) erstreckendes aerodynamisches Profil aufweist, wobei das Verfahren die folgenden Schritte aufweist: Auslegen (210) des Rotorblattes (108) für Auslegungsumgebungsbedingungen, die wenigstens eine Auslegungsturbulenzintensität enthalten, wobei das Auslegen ein Vorsehen von Schallschutzmitteln (130, 140, 150, 160, 170) innerhalb eines Blattaußenbereiches (120) des Rotorblattes (108), der als die an die Rotorblattspitze angrenzenden 50% der Rotorblattlänge definiert ist, umfasst; Bereitstellen (220) einer Turbulenzintensität am Aufstellort der Windenergieanlage (100); Vergleichen (230) der Turbulenzintensität mit der Auslegungsturbulenzintensität; und Erhöhen (240) des Induktionsfaktors durch Vergrößern der Schallschutzmittel (130, 140, 150, 160, 170) in dem Fall, dass die Turbulenzintensität geringer als die Auslegungsturbulenzintensität ist.

## Beschreibung

Die Erfindung betrifft ein Verfahren zum Optimieren eines Rotorblattes einer Windenergieanlage, ein Rotorblatt eines Rotors einer Windenergieanlage sowie eine Windenergieanlage und einen Windpark.

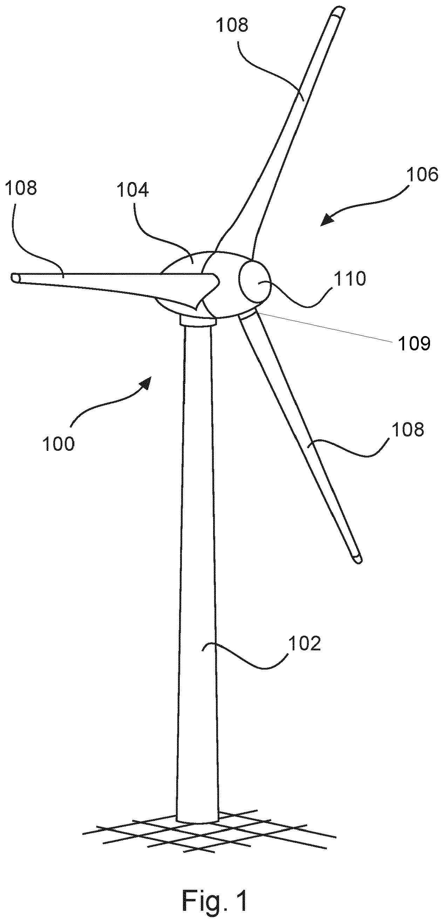

Windenergieanlagen sind allgemein bekannt und beispielsweise wie in Fig. 1 ausgestaltet. Für die Emissionen und die Effizienz der Windenergieanlage ist das Design des beziehungsweise der Rotorblätter ein wichtiger Aspekt. Die Rotorblätter einer Windenergieanlage weisen üblicherweise eine Saug- und eine Druckseite auf. Die Saug- und die Druckseite laufen an der Rotorblatthinterkante des Rotorblatts, kurz Hinterkante, zusammen. Durch den Druckunterschied zwischen Saug- und Druckseite können Wirbel erzeugt werden, die besonders an der Spitze des Rotorblattes für eine Geräuschemission und Leistungsminderung sorgen können. Weiter entstehen bei der Umströmung der Blattoberfläche durch Reibungseffekte auf der Druck- und auf der Saugseite kleinskalige Wirbel und Druckfluktuationen, die beim Überstömen der Rotorblatthinterkante eine Geräuschemission verursachen.

Die Auslegung von Windenergieanlagen respektive ihrer Bauteile erfolgt anhand standardisierter Richtlinien (z.B. IEC 61400), welche die wesentlichen Auslegungsanforderungen zur Sicherstellung der technischen Integrität von Windenergieanlagen zum Gegenstand hat. Der Zweck dieser Norm besteht darin, für ein angemessenes Schutzniveau gegen Schäden aus Risiken während der geplanten Lebensdauer der Windenergieanlage zu sorgen. Hierbei fließen Normparameter, abhängig von einer normierten Last jedoch nicht standortspezifisch, in die Dimensionierung der Windenergieanlage ein. Bei den Normparametern handelt es sich unter anderem um Windscherung, das Auftreten von Turbulenzen, die Turbulenzintensität, klimatische Bedingungen, Luftdichte, Referenzgeschwindigkeiten für Windklassen und Windzonen. Aufgrund ihrer von der normierten Last abhängigen Dimensionierung weisen die Rotorblätter ein definiertes Profil mit fixen Parametern, wie z.B. der Profiltiefe mit dazugehörigen Profilpolaren, z.B. Hub-/Zugpolare, auf. Dieses festgelegte Profil bildet die Grundlage für die Lastrechnung und die Berechnung der Jahresenergieerzeugung (AEP).

Die Auslegung einer Windenergieanlage beziehungsweise die daraus resultierende Ausgestaltung der Rotorblätter orientiert sich überwiegend an einem normierten Standort beziehungsweise einer normierten Last, wobei auch standortspezifische Nachweise/Lasten einfließen können. Hierdurch sind die Rotorblätter in ihrer späteren geometrischen Ausgestaltung festgelegt. Insbesondere weisen die Rotorblätter eine fixe Geometrie auf, welche einer nachträglichen Anpassung bezüglich Verwindung oder Profiltiefe im Herstellprozess nicht mehr zugänglich ist.

Vor diesem Hintergrund war es eine Aufgabe der vorliegenden Erfindung, standortspezifische Optimierung von Rotorblättern ohne Veränderung der fixen Geometrie zu ermöglichen.

In einem ersten Aspekt wird ein Verfahren zum Optimieren eines Rotorblattes einer Windenergieanlage bereitgestellt, wobei sich das Rotorblatt von einem Rotorblattanschluss bis zu einer Rotorblattspitze in einer Rotorblattlängsrichtung mit einer Rotorblattlänge erstreckt und dabei ein sich zwischen einer Vorderkante und einer Hinterkante erstreckendes aerodynamisches Profil aufweist. Es handelt sich somit um ein grundsätzlich bekanntes Rotorblatt, an dem erfindungsgemäß durch das bereitgestellte Verfahren eine Optimierung durchführbar ist.

Das Verfahren weist die folgenden Schritte auf: Auslegen des Rotorblattes für Auslegungsumgebungsbedingungen, die wenigstens eine Auslegungsturbulenzintensität enthalten, wobei das Auslegen ein Vorsehen von Schallschutzmitteln innerhalb eines Blattaußenbereiches des Rotorblattes, der als die an die Rotorblattspitze angrenzenden 50% der Rotorblattlänge definiert ist, umfasst.

Der Vorgang des Auslegens von Windenergieanlagen ist weithin bekannt und in geläufigen Fachbüchern umfassend beschrieben. Unter zugrunde gelegten Auslegungsbedingungen, beispielsweise eine Auslegungsdrehzahl und/oder Auslegungsschnelllaufzahl, wird üblicherweise eine möglichst effiziente und langlebige, gleichzeitig aber auch kostengünstige Ausgestaltung der Rotorblätter gesucht.

Die Auslegungsbedingungen umfassen auch Auslegungsumgebungsbedingungen, die also die Umgebung am Aufstellort der Windenergieanlage unter Auslegungsbedingungen modelliert. Die Auslegungsumgebungsbedingungen sind also theoretische Umgebungsbedingungen, die der Auslegung zugrunde liegen, nicht aber notwendigerweise am eigentlichen Aufstellort der Windenergieanlage auch vorherrschen. Durch Abweichungen zwischen Auslegungsumgebungsbedingungen und den Umgebungsbedingungen am Aufstellort der Windenergieanlage können sich beispielsweise Leistungseinbußen ergeben. Hier ist als wichtigster Fall eine Turbulenzintensität relevant, die am Aufstellort geringer als die Auslegungsturbulenzintensität ist. Die Auslegungsturbulenzintensität kann beispielsweise eine Normturbulenzintensität, aber auch ein anderer Wert sein.

In einem weiteren Schritt wird erfindungsgemäß dafür eine Turbulenzintensität am Aufstellort der Windenergieanlage bereitgestellt. Diese Turbulenzintensität kann als ein Durchschnittswert oder ein Extremwert oder ein anderer für die Turbulenzintensität am Aufstellort repräsentativer Wert bestimmt werden. Die Turbulenzintensität kann beispielsweise gemessen oder aus meteorologischen Modellen abgeleitet werden.

In einem weiteren Schritt erfolgt erfindungsgemäß ein Vergleichen der Turbulenzintensität mit der Auslegungsturbulenzintensität und ein Erhöhen des Induktionsfaktors durch Vergrößern der Schallschutzmittel in dem Fall, dass die Turbulenzintensität geringer als die Auslegungsturbulenzintensität ist.

Wird also eine Turbulenzintensität am Aufstellort der Windenergieanlage erhalten, die geringer als die Auslegungsturbulenzintensität ist, werden die Schallschutzmittel erfindungsgemäß vergrößert, um eine Erhöhung des Induktionsfaktors und damit eine Leistungssteigerung zu bewirken.

Die zugrundeliegende Erkenntnis der Erfinder der vorliegenden Erfindung basiert darauf, dass auch die Schallschutzmittel die effektive Profiltiefe und damit den erzeugten Auftrieb am Ort der Anbringung der Schallschutzmittel erhöhen.

Bei einer Turbulenzintensität, die geringer als die Auslegungsturbulenzintensität ist, ergeben sich zwei Effekte. Zunächst ist der erzeugte Lärm geringer, wodurch die Möglichkeit besteht, auch aeroakustische Kompromisse einzugehen, die höhere Lärmemissionen zur Folge haben. Darüber hinaus ist die Induktion geringer, was eine geringere Leistung bedingt und damit den Wunsch nach einer Leistungserhöhung begründet.

Die Vergrößerung der Schallschutzmittel ermöglicht in diesem Fall, ohne eine Veränderung der Geometrie des Rotorblattes eine standortbasierte Optimierung, insbesondere Leistungsoptimierung des Rotorblattes durchzuführen.

Schallschutzmittel umfassen beispielsweise an der Hinterkante des Rotorblatts angebrachte Serrations oder robuste Plattenzusätze.

Es ist ebenfalls möglich, Kombinationen verschiedener Arten von Schallschutzmitteln an dem Rotorblatt anzuordnen.

In einer bevorzugten Ausgestaltung sind die Schallschutzmittel als Serrations mit mehreren in Rotorblattlängsrichtung nebeneinander angeordneten Zacken ausgebildet, die derart angeordnet sind, dass sich eine gezackte Kontur der effektiven Hinterkante im Bereich der Schallschutzmittel ausbildet, wobei der Schritt des Erhöhens des Induktionsfaktors mindestens eine einer Vielzahl von Möglichkeiten für das Vergrößern einer oder mehrerer Zacken umfasst.

In einer Ausgestaltung umfasst das Verfahren das Vergrößern einer oder mehrerer der Zacken durch geometrisch ähnliches Skalieren der Zacken, wobei ein Verhältnis von Länge der Zacken zu Breite der Zacken im Wesentlichen gleich bleibt.

In einer Ausgestaltung umfasst das Verfahren das Vergrößern einer oder mehrerer der Zacken durch Erhöhen der Länge der Zacken unter Beibehaltung der Breite der Zacken.

In einer Ausgestaltung umfasst das Verfahren das Vergrößern einer oder mehrerer der Zacken durch Verringern eines Anteils an Perforationen an einer Oberfläche der Zacken.

In einer Ausgestaltung umfasst das Verfahren das Vergrößern einer oder mehrerer der Zacken durch Erhöhen der Konvexität der Seitenkanten der Zacken.

In einer Ausgestaltung umfasst das Verfahren das Vergrößern einer oder mehrerer der Zacken durch Ändern der dreieckigen Form der Zacken zu einer vieleckigen Form.

Serrations sind eine bekannte Art von Schallschutzmitteln, die an der Hinterkante angeordnet sind und eine effektive Kontur der Hinterkante, also einer Abströmkante, modifizieren. Damit werden die akustischen Auswirkungen der Luftverwirbelungen an der Hinterkante des Rotorblattes verringert und die Windenergieanlage kann geräuschärmerbetrieben werden.

Bei einem geometrisch ähnlichen Skalieren bleibt das Verhältnis von Länge zu Breite der Zacken im Wesentlichen gleich. In anderen Optionen kann auch nur die Länge der Zacken vergrößert werden, wobei die Breite der Zacken gleich bleibt. Auch Kombinationen sind vorstellbar, wobei beispielsweise eine doppelte Länge mit einer um 50% größeren Breite einhergeht.

Serrations haben meist eine dreieckige Form, aber auch vieleckige Serrations oder Serrations mit konkaver und/oder konvexer Kontur werden im Rahmen der vorliegenden Erfindung berücksichtigt. Bei einer dreieckigen Form nehmen die Zacken fünfzig Prozent der Fläche jenseits der Hinterkante ein, d. h. des Bereichs mit der gezackten Kontur. Durch eine Veränderung der Kantenkontur, beispielsweise durch eine konvexe Formgebung oder durch eine vieleckige Formgebung, kann der Flächenanteil der Serrations an der Gesamtfläche jenseits der Hinterkante erhöht werden, wodurch sich der Induktionsfaktor erhöht.

Die Vergrößerung kann also darin bestehen, dass einzelne Serrations entweder in der Breite oder in der Länge vergrößert werden. Alternativ oder zusätzlich kann die Vergrößerung auch darin bestehen, dass die äußere Geometrie der Serrations geändert wird, indem beispielsweise die Kanten konvex geformt werden oder die Anzahl der Ecken geändert wird, beispielsweise auf vier, fünf oder sieben.

In einer bevorzugten Ausgestaltung umfasst der Schritt des Erhöhens des Induktionsfaktors ein Anpassen eines Einbauwinkels der Schallschutzmittel, wobei ein Einbauwinkel als Winkel zwischen einer lokalen Profilsehne des Rotorblattes und dem Schallschutzmittel, insbesondere der Zacke der Serrations, definiert ist, wobei die lokale Profilsehne als direkte Verbindung der Vorderkante und der Hinterkante an dem Ort des Schallschutzmittels bestimmt wird.

Die Serrations verändern die effektive Profiltiefe, der Einbauwinkel der Serrations demnach die Krümmung des Profils. Indem der Einbauwinkel angepasst wird, kann damit insbesondere die Krümmung des Profils verändert und der erzeugte Auftrieb beeinflusst werden.

Die Anpassung des Einbauwinkels kann dadurch erfolgen, dass die Schallschutzmittel mit einem anderen Einbauwinkel zum Rotorblatt eingebaut werden als dem Einbauwinkel, der sich aus den Auslegungsbedingungen ergibt. Der Einbau der Serrations kann das Einlaminieren der Serrations in das Rotorblatt umfassen. In anderen Beispielen kann der Einbauwinkel durch Verbiegen der Serrations unter mechanischer Krafteinwirkung eingestellt werden.

Insbesondere eine abgerundete Form, also eine Verwölbung, der Schallschutzmittel in Richtung der Druckseite des Rotorblattes kann den Auftrieb und damit den Induktionsfaktor erhöhen. In dieser Ausführungsform wirken die Schallschutzmittel ähnlich wie eine Klappe oder ein Vorflügel.

In einer bevorzugten Ausführung umfasst das Verfahren ferner die nachfolgenden Schritte: Bestimmen des Einflusses der Turbulenzintensität auf den propagierten Schall, Optimieren der Leistung unter Berücksichtigung der Turbulenzintensität und des Garantieschallleistungspegels, insbesondere Optimieren der Leistung durch Vergrößern der Schallschutzmittel.

Zur Optimierung der Leistung gehört insbesondere die Maximierung der erzeugten elektrischen Leistung der Windenergieanlage. Gleichzeitig darf die Leistungssteigerung nicht zu einer übermäßigen Schallemission führen.

Der Garantieschallleistungspegel ist ein Maß, das den maximal abgestrahlten Schallleistungspegel der Windenergieanlage beschreibt. Anders ausgedrückt: Die Steuerung der Windenergieanlage bezieht den emittierten Schallpegel als Randbedingung mit ein, wenn beispielsweise die elektrische Leistung maximiert werden soll. In manchen Fällen wird dann der Betrieb der Windkraftanlage durch den Garantieschallleistungspegel begrenzt oder eingeschränkt. Dies kann zeitweise der Fall sein, zum Beispiel während der Nacht oder bei bestimmten Windrichtungen.

Ein weiteres Beispiel ist die Veränderung des Winkels der Schallschutzmittel, um die Leistung unter Berücksichtigung der Turbulenzintensität und des Garantieschallleistungspegels zu optimieren.

Geringere Turbulenzintensitäten gehen üblicherweise mit niedrigeren Schallleistungen einher, so dass auch eine "Schallreserve" vorhanden ist, die beispielsweise durch zusätzliche Leistung gehoben werden kann. Die zusätzliche Leistung wird erfindungsgemäß nicht ausschließlich durch eine Anpassung der Betriebsführung, sondern zuvorderst durch eine Erhöhung der Induktion im Blattspitzenbereich, nämlich durch die Vergrößerung der Schallschutzmittel erreicht.

In einer bevorzugten Ausgestaltung umfasst der Schritt des Erhöhens des Induktionsfaktors ein Vergrößern einer Ausdehnung der Schallschutzmittel in Rotorblattlängsrichtung, insbesondere Vergrößern einer Anzahl von Zacken von Serrations.

Alternativ zu einem Vergrößern der Anzahl von Zacken kann auch die bestehende Anzahl skaliert werden, das heißt also Länge und/oder Breite der Zacken erhöht werden. In jedem Fall wird die durch die Schallschutzmittel bewirkte zusätzliche Induktion in dieser Ausführung erhöht.

In einer bevorzugten Ausgestaltung umfasst der Schritt des Erhöhens des Induktionsfaktors ein Vergrößern der Schallschutzmittel mit einem in Rotorblattlängsrichtung variierenden Skalierungsfaktor.

Kern dieser Ausführung ist die unterschiedlich Auswirkung der Schallschutzmittel in Abhängigkeit der Position in Rotorblattlängsrichtung. Somit kann die Induktion erfindungsgemäß erhöht werden, ohne dass beispielsweise die dabei in Kauf genommenen zusätzlichen Schallemissionen einen bestimmten Grenzwert überschreiten.

In einer bevorzugten Ausgestaltung nimmt der Skalierungsfaktor von der Rotorblattspitze zum Ende der Schallschutzmittel zu.

Diese Ausführung trägt der Erkenntnis Rechnung, dass die Einflüsse der Schallschutzmittel auf den erzeugten Schall besonders in Umgebung der Rotorblattspitze hoch sind. Um die Schallemissionsbeschränkungen einzuhalten, ist es demnach vorteilhaft, die Vergrö-ßerung der Schallschutzmittel mit größerem Abstand von der Rotorblattspitze entsprechend stärker auszugestalten.

In einer Ausführung ist der Skalierungsfaktor an der Rotorblattspitze im Wesentlichen 1. Das bedeutet, dass eine Vergrößerung der Schallschutzmittel an der Rotorblattspitze nicht stattfindet, aber die Schallschutzmittel sich mit steigendem Abstand von der Rotorblattspitze entsprechend vergrößern. Der Vergrößerungsfaktor kann linear, quadratisch oder mit einem anderen funktionalen Zusammenhang mit dem Abstand von der Rotorblattspitze zunehmen.

In einem weiteren Aspekt wird ein Rotorblatt einer Windenergieanlage bereitgestellt, wobei sich das Rotorblatt von einem Rotorblattanschluss bis zu einer Rotorblattspitze in einer Rotorblattlängsrichtung mit einer Rotorblattlänge erstreckt und dabei ein sich zwischen einer Vorderkante und einer Hinterkante erstreckendes aerodynamisches Profil aufweist, wobei das Rotorblatt innerhalb eines Blattaußenbereiches, der als die an die Rotorblattspitze angrenzenden 50% der Rotorblattlänge definiert ist, Schallschutzmittel aufweist, wobei die Schallschutzmittel als Serrations mit mehreren in Rotorblattlängsrichtung nebeneinander angeordneten Zacken ausgebildet sind, die derart angeordnet sind, dass sich eine gezackte Kontur der effektiven Hinterkante im Bereich der Schallschutzmittel ausbildet, wobei für die Schallschutzmittel eine Auslegungsgröße, bei der das Rotorblatt beim Einsatz in einer Auslegungsturbulenzintensität den Garantieschallleistungspegel erfüllt, bestimmt ist.

Die Schallschutzmittel weisen erfindungsgemäß in dem Fall, dass die Turbulenzintensität geringer als die Auslegungsturbulenzintensität ist, eine größere Größe als die Auslegungsgröße auf.

Das erfindungsgemäße Rotorblatt ist demnach ein unmittelbares Ergebnis des erfindungsgemäßen Verfahrens gemäß dem beschriebenen erfindungsgemäßen Aspekt. Auch die bevorzugten Ausgestaltungen des beschriebenen Verfahrens sind analog auf das Rotorblatt mit Erreichen dergleichen Vorteile übertragbar.

In einem weiteren Aspekt wird eine Windenergieanlage mit einem oder mehreren erfindungsgemäßen Rotorblättern vorgeschlagen.

In einem weiteren Aspekt wird ein Windpark mit einer oder mehreren erfindungsgemäßen Windenergieanlagen vorgeschlagen.

In einem weiteren Aspekt wird ein Verfahren zum Nachrüsten eines Rotorblatts einer Windenergieanlage vorgeschlagen, wobei sich das Rotorblatt von einem Rotorblattanschluss bis zu einer Rotorblattspitze in einer Rotorblattlängsrichtung mit einer Rotorblattlänge erstreckt und dabei ein sich zwischen einer Vorderkante und einer Hinterkante erstreckendes aerodynamisches Profil aufweist, wobei das Verfahren die folgenden Schritte aufweist: Bereitstellen einer Turbulenzintensität am Aufstellort der Windenergieanlage; Vergleichen der Turbulenzintensität mit einer Auslegungsturbulenzintensität; und Erhöhen eines Induktionsfaktors des Rotorblatts durch Anbringen und/oder Vergrößern von Schallschutzmittel, innerhalb eines Blattaußen-bereiches des Rotorblattes, der als die an die Rotorblattspitze angrenzenden 50% der Rotorblattlänge definiert ist, in dem Fall, dass die Turbulenzintensität geringer als die Auslegungsturbulenzintensität ist.

Nachrüsten beschreibt in diesem Kontext, dass die Windenergieanlage vor dem Vergrößern der Schallschutzmittel bereits in Betrieb war oder zumindest in einem Zustand, in dem ein Betrieb möglich gewesen wäre.

Schließlich wird in einem weiteren Aspekt ein Verfahren zum Optimieren einer Windenergieanlage vorgeschlagen, umfassend mindestens ein Rotorblatt, wobei das Verfahren die folgenden Schritte aufweist: Bereitstellen einer Turbulenzintensität am Aufstellort der Windenergieanlage; Vergleichen der Turbulenzintensität mit einer Auslegungsturbulenzintensität; und Erhöhen einer generierten Leistung der Windenergieanlage durch Anpassen einer Induktionsfaktorverteilung des mindestens einen Rotorblatts durch strukturelle Veränderung des mindestens einen Rotorblatts, in dem Fall, dass die Turbulenzintensität geringer als die Auslegungsturbulenzintensität ist.

Eine strukturelle Veränderung des mindestens einen Rotorblatts beinhaltet dabei bevorzugt eine Anpassung von Schallschutzmitteln oder das Anbringen von Schallschutzmitteln, insbesondere zusätzlichen Schallschutzmitteln.

In einer Ausführung wird dabei weder eine Drehzahl, die einer Auslegungsdrehzahl entspricht, erhöht, noch ein Pitchwinkel, der einem Auslegungspitchwinkel entspricht, verringert.

Die Drehzahl ist dabei die Drehzahl des Rotors. Der Pitchwinkel ist der Anstellwinkel des entsprechenden Rotorblatts. Die Auslegungsdrehzahl und der Auslegungspitchwinkel sind Standardparameter anhand derer die Dimensionierung der Windenergieanlage und die Auslegung der Rotorblätter erfolgt.

Auch die erfindungsgemäße Windenergieanlage und der erfindungsgemäße Windpark ermöglichen das Erreichen der gleichen Vorteile wie das erfindungsgemäße Rotorblatt bzw. die beschriebenen erfindungsgemäßen Verfahren. Ebenso können sowohl die Windenergieanlage als auch der Windpark mit den als vorteilhaft beschriebenen Ausgestaltungen unter Erlangung des beschriebenen Vorteils kombiniert werden.

Weitere Vorteile und bevorzugte Ausgestaltungen werden nachfolgend mit Verweis auf die beigefügten Figuren beschrieben. Hierbei zeigen:
- Fig. 1: schematisch und exemplarisch eine Windenergieanlage;
- Fig. 2-6: schematisch und exemplarisch ein Rotorblatt mit Schallschutzmittel; und
- Fig. 7: schematisch und exemplarisch ein Flussdiagramm eines Verfahrens.

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten.

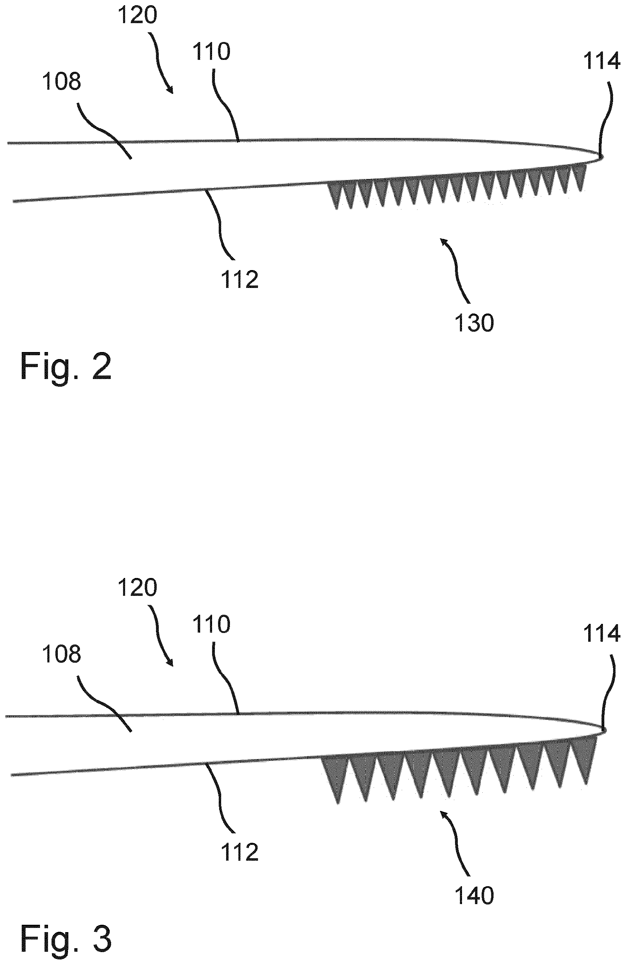

Fig. 2 zeigt schematisch und exemplarisch einen Blattaußenbereich 120 des Rotorblattes 108. Der Blattaußenbereich 120 ist definiert als die äußeren 50% des Rotorblattes 108, die sich näher an einer Blattspitze 114 und damit weit entfernt von einer Rotationsachse des Rotors 106 befinden. In dem Blattaußenbereich 120 weist das Rotorblatt 108 Schallschutzmittel 130 auf, die sich über eine Hinterkante 112 hinaus erstrecken. An der Hinterkante 112 treffen die sich an einer Vorderkante 110 aufspaltende Saugseite und Druckseite des aerodynamischen Profils wieder zusammen.

Die Schallschutzmittel 130 sind als Serrations ausgeführt, die also eine gezackte, sägezahnartige Kontur mit abwechselnden Spitzen und Kerben ausbilden, die durch Kanten verbunden sind, die unter einem Winkel zu der Rotorblattlängsrichtung stehen. Die Hinterkantenkontur wird also im Bereich der Schallschutzmittel 130 durch die Serrations gebildet.

Die Serrations können durch ihre Länge, Breite und ihren Einbauwinkel beschrieben werden. Das Verhältnis von Länge und Breite ergibt den Winkel zu der Rotorblattlängsrichtung. Der Einbauwinkel beschreibt den Winkel der Serration zu einer Profilsehne des Rotorblattes an der Einbauposition der Serration, wobei die Profilsehne die kürzeste bzw. direkte Verbindung zwischen Vorderkante und Hinterkante ist.

Die Erfindung bezieht sich auf die geometrische Ausgestaltung des Rotorblattes 108 im Blattaußenbereich 120 zur Optimierung des Induktionsfaktors bei Windenergieanlagen 100 an Standorten mit niedriger Turbulenzintensität.

Serrations werden im Blattaußenbereich 120 standardmäßig aus Gründen der Schallreduktion verbaut. Simulationen und experimentelle Untersuchungen der Erfinder der vorliegenden Erfindung zeigen deutlich, dass eine Verlängerung der Serrations, d.h. eine Erhöhung der Länge der einzelnen Zacken über die Hinterkante 112, die ohne Schallschutzmittel 130 vorliegen würde über die standardmäßige Länge hinaus, den Auftrieb am Rotorblatt 108 und damit den Induktionsfaktor erhöhen können.

Durch eine Verlängerung der Serrations ergibt sich eine effektive Zunahme der lokalen Blatttiefe, also des lokalen Abstands zwischen Vorderkante 110 und Hinterkante 112, nämlich da die Serrations die Kontur der Hinterkante 112 beeinflussen. Die Auftrieb erzeugende Fläche wird dadurch größer.

Die Turbulenzintensität ist eine dimensionslose Zahl, die definiert ist als die Standardabweichung der Windgeschwindigkeit innerhalb eines Zeitintervalls geteilt durch die mittlere Windgeschwindigkeit in diesem Zeitintervall.

Die Turbulenzintensität hat einen starken Einfluss auf die Leistung des Windes, d.h. die Windleistung, wobei eine höhere Turbulenzintensität mit höheren Windleistungen und damit auch mit höheren erreichbaren elektrischen Leistungen der Windenergieanlage 100 einhergeht.

Eine Windenergieanlage 100 wird für bestimmte Umgebungsparameter ausgelegt, das heißt im Entwurfsprozess werden Randbedingungen festgelegt, beispielsweise eine Auslegungsturbulenzintensität, für die die Windenergieanlage 100 dann optimiert wird. Für die Auslegungsturbulenzintensität ist ein optimaler Betrieb der Windenergieanlage möglich, Abweichungen von der Auslegungsturbulenzintensität führen grundsätzlich dazu, dass die Windenergieanlage 100 nicht an ihrem im Entwurfsprozess bestimmten, optimalen Betriebspunkt betrieben werden kann.

Gleichzeitig ist es nicht möglich, für jeden Standort eine individuelle Windenergieanlage auszulegen und zu testen, so dass ein Bedarf an möglichst breit einsetzbaren Windenergieanlagen 100 und insbesondere Rotorblättern 108 besteht.

An Standorten mit einer insbesondere deutlich geringeren Turbulenzintensität als die der Auslegungsturbulenzintensität wird unter Verwendung einer Standardbetriebsführung generell ein reduzierter Induktionsfaktor auftreten. Ein reduzierter Induktionsfaktor heißt, dass die Windenergieanlage 100 weniger Energie aus dem Wind entnimmt und damit die Leistung der Windenergieanlage 100 sinkt.

Bisherige Ansätze zur Leistungssteigerung liegen in einer Anpassung der Betriebsführung (z.B. einer Erhöhung der Drehzahl und/oder Verringerung der Pitchwinkel um die lokalen Anstellwinkel zu erhöhen), um die Induktionsverluste auszugleichen. Dies führt allerdings dazu, dass z.B. durch die Drehzahlerhöhung die Lebensdauerlasten in Schwenkrichtung steigen. Auch kann die Erhöhung lokaler Anstellwinkel dazu führen, dass am Blatt Strömungsablösungen auftreten (geringere Stallreserve), was zu erhöhten Lasten und einer Lärmbelastung führen kann.

Gemäß der Erfindung wird nun eine Lösung mit einem vergrößerten Schallschutzmittel, insbesondere verlängerten Serrations, vorgeschlagen, bei der der Induktionsfaktor angepasst werden kann, ohne höhere Schwenklasten und geringere Stallreserven in Kauf nehmen zu müssen.

Die Vorteile der hier beschriebenen Erfindung bestehen darin, dass durch Verwendung von Serrations, welche länger/größer sind als die auslegungsgemäßen Serrations für Normstandorte, an dichtereduzierten Standorten signifikante Leistungs- und damit Ertragssteigerungen erreicht werden können.

Fig. 3 zeigt schematisch und exemplarisch ein Rotorblatt 108, bei dem die Schallschutzmittel 130 aus Fig. 2 durch Schallschutzmittel 140 ersetzt sind, die geometrisch ähnlich in der Größe skalierte Serrations aufweisen. Die Serrations der Schallschutzmittel 140 sind geometrisch skaliert, was heißt, dass ein Seitenverhältnis der Serrationzacken Länge zu Breite gleich bleibt. Die Zahl der Zacken ist demnach geringer als bei den Schallschutzmitteln 130, die Fläche und damit der Einfluss auf die Induktion jedoch größer.

Die Vergrößerung der verwendeten Serrations kann sowohl durch eine geometrisch ähnliche Skalierung (Seitenverhältnis der Serrationzacken Länge zu Breite bleibt gleich) als auch durch eine Verlängerung der Zackengeometrie unter Beibehaltung der Ursprungsbreite erfolgen (Verhältnis Länge zu Breite der Serrationzacken vergrößert sich).

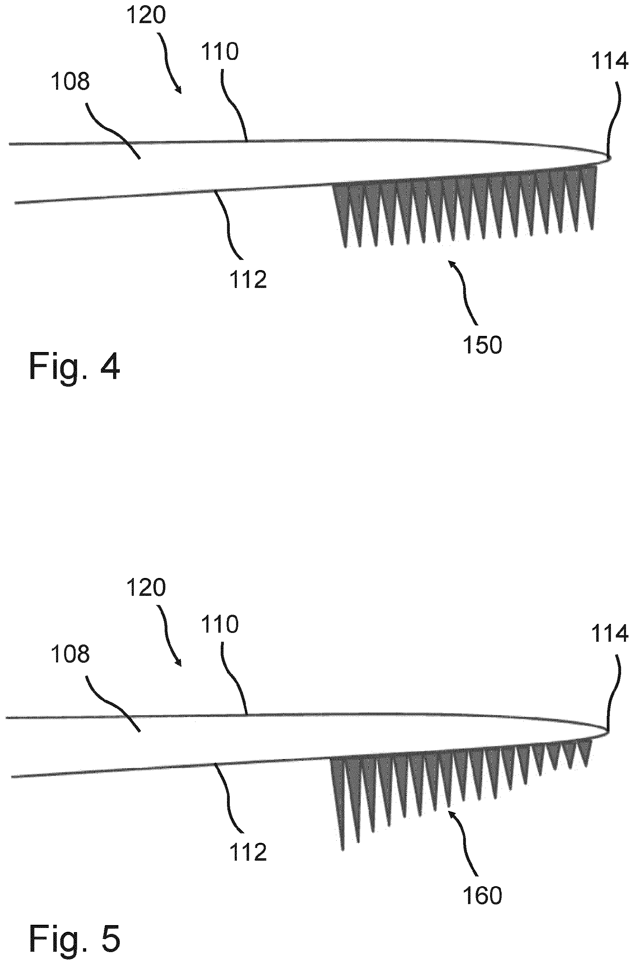

Die zweite Alternative mit Verlängerung der Zackengeometrie unter Beibehaltung der Ursprungsbreite ist schematisch und exemplarisch in den Schallschutzmitteln 150 der Fig. 4 zu sehen.

Zusätzlich zur Vergrößerung der Serrations kann (nicht gezeigt) auch eine Anpassung der Einbauwinkel erfolgen, um den Auftrieb weiter zu steigern. Der Einbauwinkel ist der Winkel zwischen den Serrations und der Profilsehne des Rotorblattes 108. Ein positiver Einbauwinkel kann in Richtung der Druckseite, ein negativer Winkel in Richtung der Saugseite definiert werden. Eine Anpassung in Richtung der Druckseite führt durch die Erhöhung der Krümmung zu einer Auftriebssteigerung.

Ein besonderer Vorteil von dichtereduzierten Standorten liegt darin, dass bei geringerer Turbulenzintensität auch weniger Schall von der Windkraftanlage 100 propagiert wird. Eine aeroakustisch optimale Serrationauslegung ist an solchen Standorten daher üblicherweise nicht mehr zwingend erforderlich.

Es können aeroakustische Kompromisse zugunsten der Leistung eingegangen werden, ohne die Garantieschallleistungspegel zu überschreiten.

Fig. 5 zeigt schematisch und exemplarisch eine weitere Ausgestaltung von Schallschutzmitteln 160. Die Größenskalierung der Serrations, das heißt die in Fig. 3 gezeigte geometrisch ähnliche Skalierung und/oder die in Fig. 4 gezeigte Skalierung in Länge der Zacken muss nicht notwendigerweise über die gesamte radiale Ausdehnung in gleicher Weise erfolgen. Vielmehr können positionsabhängig auch unterschiedliche Skalierungsfaktoren im Vergleich zur Standartdichteauslegung zur Anwendung kommen. So kann z.B. im aeroakustisch wichtigen Bereich der Blattspitze eine eher akustisch optimale Auslegung verwendet werden, während weiter innen am Rotorblatt zu einer leistungsoptimalen Serrationskalierung übergegangen wird.

Dies zeigt sich in Fig. 5 darin, dass quasi keine Vergrößerung der Schallschutzmittel 160 an der Rotorblattspitze 114 erfolgt, wohingegen die Schallschutzmittel 160 mit zunehmendem Abstand von der Rotorblattspitze 114 immer stärker vergrößert werden.

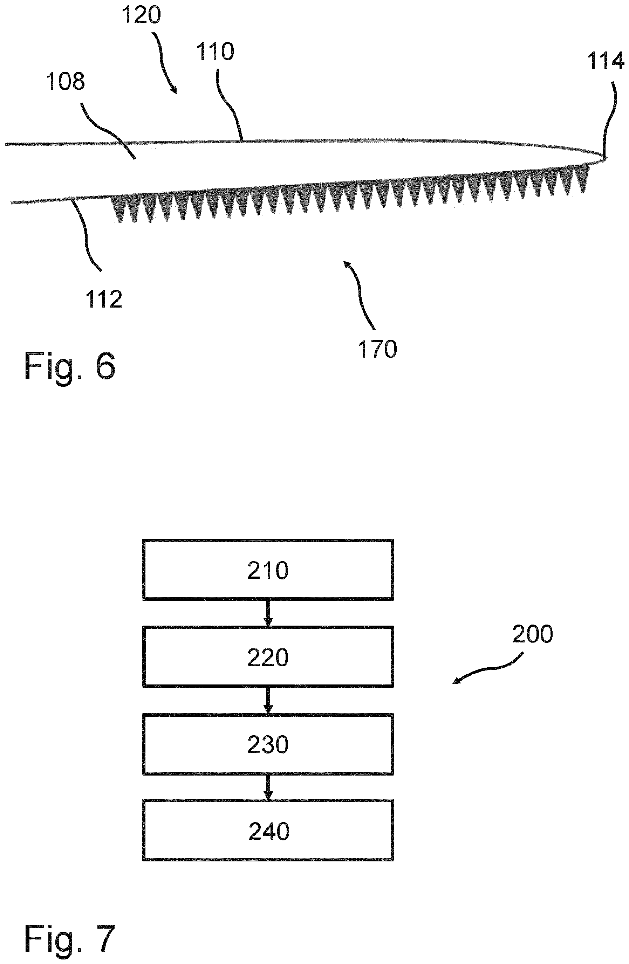

Fig. 6 zeigt schematisch und exemplarisch eine weitere Ausgestaltung von Schallschutzmitteln 170. Eine weitere Möglichkeit der Leistungssteigerung an dichtereduzierten Standorten ist auch eine Ausdehnung des Bereiches, in dem Schallschutzmittel 170 montiert werden, beispielsweise dort weitere Serrations montiert werden. Die zusätzlichen, weiter innen am Rotorblatt montierten Serrations können in diesem Bereich effektiv den Induktionsfaktor anheben.

Die in Rotorblattlängsrichtung weiter vergrößerten Schallschutzmittel 170 können natürlich auch standortspezifisch in ihrer Größe und Breite skaliert werden, also mit den in Fig. 3, 4 und 5 gezeigten Ausführungen kombiniert werden.

Fig. 7 zeigt schematisch und exemplarisch einen Ablauf eines Verfahrens 200 zum Optimieren eines Rotorblattes 108 einer Windenergieanlage 100.

Das Verfahren 200 umfasst einen Schritt 210 des Auslegens des Rotorblattes 108 für Auslegungsumgebungsbedingungen, die wenigstens eine Auslegungsturbulenzintensität enthalten, wobei das Auslegen ein Vorsehen von Schallschutzmitteln 130 innerhalb eines Blattaußenbereiches des Rotorblattes, der als die an die Rotorblattspitze angrenzenden 50% der Rotorblattlänge definiert ist, umfasst.

Das Verfahren 200 umfasst zudem einen Schritt 220 des Bereitstellens einer Turbulenzintensität am Aufstellort der Windenergieanlage 100 und einen Schritt 230 des Vergleichens der Turbulenzintensität mit der Auslegungsturbulenzintensität.

Schließlich umfasst das Verfahren 200 einen Schritt 240 des Erhöhens des Induktionsfaktors durch Vergrößern der Schallschutzmittel 130 beispielsweise hin zu Schallschutzmitteln 140, 150, 160 oder 170 in dem Fall, dass die Turbulenzintensität geringer als die Auslegungsturbulenzintensität ist.

## Patentansprüche

1. Verfahren (200) zum Optimieren eines Rotorblattes (108) einer Windenergieanlage (100), wobei sich das Rotorblatt (108) von einem Rotorblattanschluss (109) bis zu einer Rotorblattspitze (114) in einer Rotorblattlängsrichtung mit einer Rotorblattlänge erstreckt und dabei ein sich zwischen einer Vorderkante (110) und einer Hinterkante (112) erstreckendes aerodynamisches Profil aufweist, wobei das Verfahren die folgenden Schritte aufweist:
Auslegen (210) des Rotorblattes (108) für Auslegungsumgebungsbedingungen, die wenigstens eine Auslegungsturbulenzintensität enthalten, wobei das Auslegen ein Vorsehen von Schallschutzmitteln (130, 140, 150, 160, 170) innerhalb eines Blattaußenbereiches (120) des Rotorblattes (108), der als die an die Rotorblattspitze angrenzenden 50% der Rotorblattlänge definiert ist, umfasst;
Bereitstellen (220) einer Turbulenzintensität am Aufstellort der Windenergieanlage (100);
Vergleichen (230) der Turbulenzintensität mit der Auslegungsturbulenzintensität; und
Erhöhen (240) des Induktionsfaktors durch Vergrößern der Schallschutzmittel (130, 140, 150, 160, 170) in dem Fall, dass die Turbulenzintensität geringer als die Auslegungsturbulenzintensität ist.

2. Verfahren (200) nach Anspruch 1, wobei die Schallschutzmittel (130, 140, 150, 160, 170) als Serrations mit mehreren in Rotorblattlängsrichtung nebeneinander angeordneten Zacken ausgebildet sind, die derart angeordnet sind, dass sich eine gezackte Kontur der effektiven Hinterkante im Bereich der Schallschutzmittel ausbildet, wobei der Schritt des Erhöhens (240) des Induktionsfaktors mindestens einen der folgenden Schritte umfasst:
Vergrößern einer oder mehrerer der Zacken durch geometrisch ähnliches Skalieren der Zacken, wobei ein Verhältnis von Länge der Zacken zu Breite der Zacken im Wesentlichen gleich bleibt,
Vergrößern einer oder mehrerer der Zacken durch Erhöhen der Länge der Zacken unter Beibehaltung der Breite der Zacken,
Vergrößern einer oder mehrerer der Zacken durch Verringern einer Anzahl an Perforationen auf der Oberfläche der Zacken,
Vergrößern einer oder mehrerer der Zacken durch Erhöhen einer Konvexität seitlicher Kanten der Zacken,
Vergrößern einer oder mehrerer der Zacken durch Verändern einer dreieckigen Form der Zacken zu einer vieleckigen Form.

3. Verfahren (200) nach einem der vorstehenden Ansprüche, wobei der Schritt des Erhöhens (240) des Induktionsfaktors umfasst:
Anpassen eines Einbauwinkels der Schallschutzmittel (130, 140, 150, 160, 170), wobei ein Einbauwinkel als Winkel zwischen einer lokalen Profilsehne des Rotorblattes und dem Schallschutzmittel, insbesondere der Zacke der Serrations, definiert ist, wobei die lokale Profilsehne als direkte Verbindung der Vorderkante (110) und der Hinterkante (120) an dem Ort des Schallschutzmittels (130, 140, 150, 160, 170) bestimmt wird.

4. Verfahren (200) nach einem der vorstehenden Ansprüche, wobei das Verfahren ferner die nachfolgenden Schritte umfasst:
Bestimmen des Einflusses der Turbulenzintensität auf einen propagierten Schall,
Optimieren der Leistung unter Berücksichtigung der Turbulenzintensität und eines Garantieschallleistungspegels, insbesondere Optimieren der Leistung durch Vergrößern der Schallschutzmittel (130, 140, 150, 160, 170).

5. Verfahren (200) nach einem der vorstehenden Ansprüche, wobei der Schritt des Erhöhens (240) des Induktionsfaktors umfasst:
Vergrößern einer Ausdehnung der Schallschutzmittel (130, 140, 150, 160, 170) in Rotorblattlängsrichtung, insbesondere Vergrößern einer Anzahl von Zacken von Serrations.

6. Verfahren (200) nach einem der vorstehenden Ansprüche, wobei der Schritt des Erhöhens (240) des Induktionsfaktors umfasst:
Vergrößern der Schallschutzmittel (130, 140, 150, 160, 170) mit einem in Rotorblattlängsrichtung variierenden Skalierungsfaktor.

7. Verfahren (200) nach Anspruch 6, wobei der Skalierungsfaktor von der Rotorblattspitze (114) zum Ende der Schallschutzmittel (130, 140, 150, 160, 170) zunimmt.

8. Verfahren (200) nach Anspruch 7, wobei der Skalierungsfaktor an der Rotorblattspitze (114) 1 ist.

9. Rotorblatt (108) einer Windenergieanlage (100), wobei
sich das Rotorblatt (108) von einem Rotorblattanschluss (109) bis zu einer Rotorblattspitze (114) in einer Rotorblattlängsrichtung mit einer Rotorblattlänge erstreckt und dabei ein sich zwischen einer Vorderkante (110) und einer Hinterkante (112) erstreckendes aerodynamisches Profil aufweist, wobei
das Rotorblatt (108) innerhalb eines Blattaußenbereiches (120), der als die an die Rotorblattspitze (114) angrenzenden 50% der Rotorblattlänge definiert ist, Schallschutzmittel (130, 140, 150, 160, 170) aufweist,
wobei die Schallschutzmittel (130, 140, 150, 160, 170) als Serrations mit mehreren in Rotorblattlängsrichtung nebeneinander angeordneten Zacken ausgebildet sind, die derart angeordnet sind, dass sich eine gezackte Kontur der effektiven Hinterkante (112) im Bereich der Schallschutzmittel (130, 140, 150, 160, 170) ausbildet,
wobei für die Schallschutzmittel (130, 140, 150, 160, 170) eine Auslegungsgröße, bei der das Rotorblatt (108) beim Einsatz in einer Auslegungsturbulenzintensität einen Garantieschallleistungspegel erfüllt, bestimmt ist,
**dadurch gekennzeichnet, dass** die Schallschutzmittel (130, 140, 150, 160, 170) in dem Fall, dass die Turbulenzintensität geringer als die Auslegungsturbulenzintensität ist, eine größere Größe als die Auslegungsgröße aufweisen.

10. Windenergieanlage (100) mit einem oder mehreren Rotorblättern (108) nach Anspruch 9.

11. Windpark mit einer oder mehreren Windenergieanlagen (100) nach Anspruch 10.

12. Verfahren zum Nachrüsten eines Rotorblatts einer Windenergieanlage, wobei sich das Rotorblatt (108) von einem Rotorblattanschluss (109) bis zu einer Rotorblattspitze (114) in einer Rotorblattlängsrichtung mit einer Rotorblattlänge erstreckt und dabei ein sich zwischen einer Vorderkante (110) und einer Hinterkante (112) erstreckendes aerodynamisches Profil aufweist, wobei das Verfahren die folgenden Schritte aufweist:
Bereitstellen (220) einer Turbulenzintensität am Aufstellort der Windenergieanlage (100);
Vergleichen (230) der Turbulenzintensität mit einer Auslegungsturbulenzintensität; und
Erhöhen (240) eines Induktionsfaktors des Rotorblatts durch Anbringen und/oder Vergrößern von Schallschutzmittel (130, 140, 150, 160, 170), innerhalb eines Blattaußen-bereiches (120) des Rotorblattes (108), der als die an die Rotorblattspitze angrenzenden 50% der Rotorblattlänge definiert ist, in dem Fall, dass die Turbulenzintensität geringer als die Auslegungsturbulenzintensität ist.

13. Verfahren zum Optimieren einer Windenergieanlage, umfassend mindestens ein Rotorblatt, wobei das Verfahren die folgenden Schritte aufweist:
Bereitstellen (220) einer Turbulenzintensität am Aufstellort der Windenergieanlage (100);
Vergleichen (230) der Turbulenzintensität mit einer Auslegungsturbulenzintensität; und
Erhöhen einer generierten Leistung der Windenergieanlage durch Anpassen einer Induktionsfaktorverteilung des mindestens einen Rotorblatts durch strukturelle Veränderung des mindestens einen Rotorblatts, in dem Fall, dass die Turbulenzintensität geringer als die Auslegungsturbulenzintensität ist.

14. Verfahren zum Optimieren einer Windenergieanlage nach Anspruch 13, wobei weder eine Drehzahl, die einer Auslegungsdrehzahl entspricht, erhöht, noch ein Pitchwinkel, der einem Auslegungspitchwinkel entspricht, verringert wird.
